Europäisches Patentamt

(19) European Patent Office

Office européen des brevets

(11) **EP 0 683 744 B1**

(12) **FASCICULE DE BREVET EUROPEEN**

(45) Date de publication et mention
de la délivrance du brevet:
**28.05.1997 Bulletin 1997/22**

(21) Numéro de dépôt: **94911876.4**

(22) Date de dépôt: **11.03.1994**

(51) Int. Cl.$^6$: **B64D 13/08**

(86) Numéro de dépôt international:
**PCT/EP94/00768**

(87) Numéro de publication internationale:
**WO 94/20363 (15.09.1994 Gazette 1994/21)**

(54) **PROCEDE ET INSTALLATION POUR LE CONDITIONNEMENT ET LA PRESSURISATION D'UN ESPACE SEMI-CLOS**

LUFTKLIMATISIERUNG UND UNTERDRUCKSETZUNGVERFAHREN UND ANLAGE FÜR EINEN TEILWEISE GESCLOSSENENEN RAUM

AIR CONDITIONING AND PRESSURISATION METHOD AND APPARATUS FOR A PARTIALLY ENCLOSED SPACE

(84) Etats contractants désignés:
**DE FR GB**

(30) Priorité: **11.03.1993 FR 9302930**

(43) Date de publication de la demande:
**29.11.1995 Bulletin 1995/48**

(73) Titulaire: **Liebherr-Aerospace Lindenberg GmbH
88161 Lindenberg/Allgäu (DE)**

(72) Inventeur: **SIGNORET, Jacques
F-75010 Paris (FR)**

(74) Mandataire: **Klunker . Schmitt-Nilson . Hirsch
Winzererstrasse 106
80797 München (DE)**

(56) Documents cités:
**WO-A-92/00877**      **FR-A- 1 581 987**
**FR-A- 2 532 408**   **US-A- 2 958 202**
**US-A- 2 966 047**   **US-A- 5 135 161**

Printed by Rank Xerox (UK) Business Services
2.14.3/3.4

## Description

La présente invention concerne un procédé et une installation de conditionnement et de pressurisation d'un espace semi-clos, notamment cabine d'aéronef ou de train.

Un moyen de transport de passagers constitue un espace semi-clos dans lequel, pour assurer la vie normale et le confort des occupants, il est nécessaire de conditionner l'air. Ce conditionnement est généralement assuré par de l'air soufflé dans ledit espace à une température régulée et une hygrométrie réduite. L'air soufflé balaie l'espace semi-clos et y réalise des échanges thermiques permettant d'atteindre la température souhaitée. Cet air soufflé est généralement constitué par un mélange d'air neuf provenant de l'extérieur et d'air recyclé prélevé dans l'espace semi-clos. Après balayage de l'espace semi-clos, l'air soufflé est évacué vers l'extérieur à travers des orifices fixes ou des orifices à section variable dans le cas où il s'avère nécessaire de pressuriser l'espace semi-clos, comme par exemple pour les cabines d'aéronefs ou de trains rapides. Fréquemment, l'espace semi-clos est divisé en plusieurs zones qui demandent des traitements différents.

L'air neuf ou recyclé est mis en circulation et comprimé soit par des compresseurs équipant le moteur principal du moyen de transport, soit par un ou des compresseurs auxiliaires mus par un moteur thermique, une turbine ou un moteur électrique. Dans le cas où il est nécessaire de pressuriser l'espace semi-clos, l'air comprimé est composé d'une partie d'air neuf de manière à compenser les fuites et assurer une perte de charge entre l'espace semi-clos et l'extérieur en vue de l'évacuation. La compression élève la température de l'air et le réglage de la température de l'air soufflé se fait en refroidissant plus ou moins l'air comprimé avant de le mélanger avec de l'air recyclé. Durant le refroidissement, des moyens sont prévus pour enlever une partie de l'eau contenue dans l'air comprimé et d'abaisser ainsi le degré hygrométrique de l'espace dans lequel l'air est soufflé.

Les moyens de refroidissement conventionnels sont multiples et utilisent soit le changement de phase d'un fluide au niveau d'un évaporateur, comme par exemple dans les groupes "Fréon" (marque déposée), soit l'expansion avec travail de l'air comprimé à travers une turbine, comme dans les groupes à air à compression et détente d'air. Des groupes de refroidissement modernes sont en particulier décrits dans la revue "Flight International, 25 décembre 1991, p. 33".

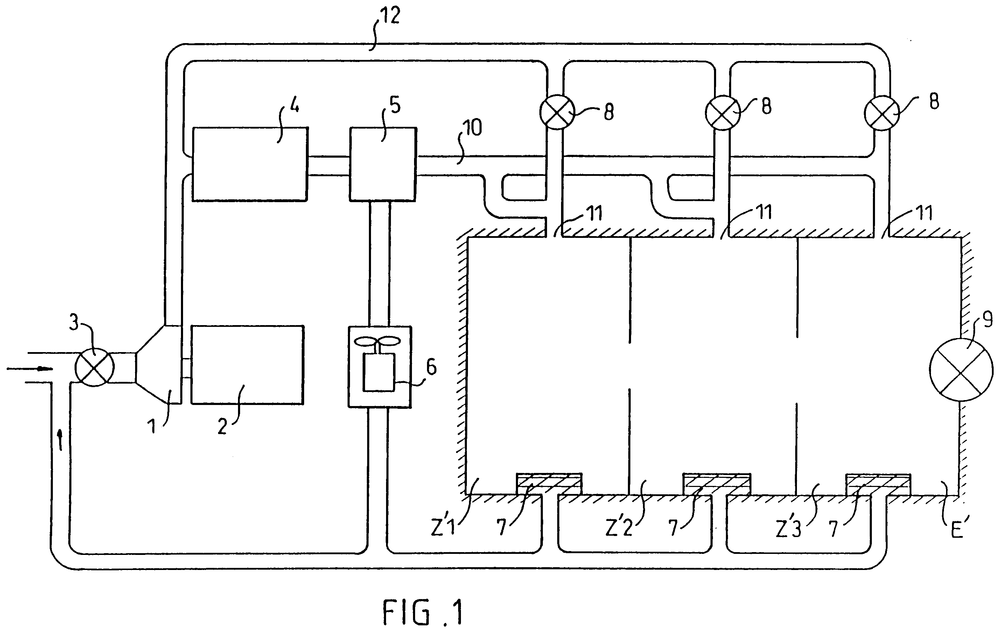

Le schéma d'une installation conventionnelle de conditionnement et de pressurisation d'un espace semi-clos est représenté à la figure 1. Une telle installation, destinée à conditionner l'air d'un espace semi-clos E' constitué par exemple par trois zones $Z'_1$, $Z'_2$ et $Z'_3$, comporte un compresseur 1 entraîné mécaniquement par un arbre relié à un moteur 2. Le compresseur 1 est muni d'un moyen de réglage 3 de son débit d'entrée. Le compresseur aspire de l'air neuf ou de l'air recyclé ou un mélange des deux. L'air délivré par le compresseur 1 est chauffé par la compression et est refroidi dans un moyen de refroidissement 4. Pour réaliser une économie substantielle sur le débit d'air comprimé nécessaire, il est essentiel que l'air comprimé quitte le refroidisseur à la température la plus basse possible, généralement -12° C, et à une pression déterminée par les pertes de charge du circuit de distribution 10 en aval. L'air à -12° C est mélangé dans une chambre de mélange 5 à de l'air recyclé extrait des différentes zones $Z'_1$, $Z'_2$, $Z'_3$ de l'espace semi-clos E', à travers des filtres 7 grâce à un ventilateur 6. Le mélange est effectué de sorte que la température de l'air à la sortie de la chambre 5 soit de l'ordre de +3° C. Les tuyauteries de distribution 10 distribuent cet air dans les différentes zones. Les échanges thermiques qui se produisent entre les tuyauteries et l'ambiance environnante chaude élèvent la température de l'air qui y circule, jusqu'à une température qui est par exemple de l'ordre de +8° C au niveau des bouches 11. Des moyens 8 d'admission d'air chaud provenant directement du compresseur 1 permettent un réglage fin de la température de chaque zone. Une vanne 9 permet l'évacuation vers l'extérieur de l'air non recyclé.

Ce type d'installation connue présente un inconvénient majeur qui grève l'économie du système. L'air comprimé reste en effet chargé d'eau qui se transforme en glace au-dessous de 0° C. Le dépôt de glace entre le refroidisseur 4 et la chambre de mélange 5 peut être évité en utilisant une configuration particulière de la tuyauterie (tuyaux courts et de forme spécifique). Par contre, ceci est impossible pour le circuit de distribution 10 qui est très long et accidenté ; il est donc essentiel d'éviter d'envoyer de l'air à des températures négatives dans ce circuit de distribution 10, et il est même préférable de ne pas descendre au-dessous de 3° C. Compte-tenu de sa longueur, les pertes par échauffement le long du circuit 10 sont prohibitives, le calorifugeage ne pouvant être que léger dans un moyen de transport. Dans une telle installation, si on raisonne par exemple et pour la clarté de l'exposé, avec de l'air exempt d'humidité, la température à régler dans l'espace semi-clos, est de l'ordre de 24° C. La puissance frigorifique fournie à l'espace semi-clos s'exprime par la relation $P = D_S (h_E - h_S)$, où $D_S$ est le débit d'air soufflé, $h_E$ l'enthalpie de l'espace semi-clos, et $h_S$ l'enthalpie de l'air soufflé. En air sec, enthalpie et température coïncident. Il apparaît immédiatement que pour de l'air soufflé à 3° C à l'entrée du circuit de distribution 10, une élévation de 5° C dans la distribution consomme (24-3)/(24-8), soit 24 % de la puissance disponible. Le rétablissement à 100 % ne peut se faire qu'en augmentant le débit comprimé de 24 %, d'où un accroissement de taille, de masse, de puissance absorbée qui est directement proportionnelle au débit, et donc de coût de l'installation.

Un second inconvénient, surtout sensible dans les installations aéronautiques, réside dans la taille de la vanne d'évacuation 9. Au sol, celle-ci doit assurer une perte de charge de 1 mb ($10^2$ Pa) entre l'intérieur et l'extérieur, alors qu'en croisière, cette perte de charge est de 600 mb ($6.10^4$ Pa). La taille de la vanne ne peut donc être optimisée, les sections étant dans un rapport de 100.

La présente invention a pour but de pallier les défauts sus-évoqués des systèmes existants. A cet effet, elle a pour objet un procédé de conditionnement et de pressurisation d'un espace semi-clos comprenant plusieurs zones, du type dans lequel on comprime de l'air, puis on le soumet à un refroidissement avant de le diviser en plusieurs flux et de le distribuer vers chaque zone de l'espace semi-clos ; selon la présente invention :

- l'air comprimé est soumis globalement après compression à un premier refroidissement dans des conditions propres à garder sa pression supérieure à celle de l'espace semi-clos,
- après division en plusieurs flux, l'air distribué vers chaque zone de l'espace mis-clos est soumis localement à une détente à l'entrée de la zone considérée.

Par "zone", on entend tout volume tel que cabine, partie de cabine, de wagon, matériellement séparé ou non de la zone voisine ; par "plusieurs zones", on entend au moins deux zones et généralement davantage.

L'installation de mise en oeuvre du procédé sus-défini comprend un ensemble amont de compression et de refroidissement d'air et un circuit de distribution aval de l'air doté d'extrémités de distribution vers chaque zone de l'espace semi-clos, et se caractérise en ce qu'elle comprend une pluralité de turbomachines reliées au circuit de distribution, chaque turbomachine étant disposée sur une extrémité de distribution à l'entrée de chaque zone pour faire subir une détente locale avec production de travail au débit d'air distribué vers la zone considérée.

Ainsi, dans le procédé et l'installation de l'invention, l'air comprimé délivré par l'ensemble de compression amont ne subit pas une détente totale au niveau amont, ce qui permet de conserver une partie du potentiel de détente et donc de refroidissement au niveau local aval à l'entrée de chacune des zones de l'espace semi-clos. L'élévation de température due aux échanges thermiques le long du circuit de distribution peut donc être compensée par une légère augmentation de la détente effectuée en aval par chaque turbomachine, opération plus économique en puissance absorbée, en masse et en coût, qu'une augmentation de débit.

Selon un mode de mise en oeuvre préféré, le procédé de l'invention est du type dans lequel on évacue vers l'extérieur une partie de l'air balayant chaque zone de l'espace mi-clos et on recycle une partie de l'air balayant les zones en le mélangeant avec de l'air neuf, le mélange recyclé étant comprimé, puis soumis globalement en amont à au moins un refroidissement avant d'être distribué vers chaque zone de l'espace mi-clos et soumis à une détente locale avec production de travail à l'entrée de chacune desdites zones.

De préférence, au cours du refroidissement amont, on effectue un séchage partiel de l'air comprimé, et l'installation est dotée à cet effet de moyens d'extraction d'eau associés à l'ensemble amont de compression et de refroidissement.

L'invention peut être appliquée dans le domaine des transports pour le conditionnement de cabines d'aéronefs de capacité importante (en particulier au-delà de 100 passagers), ou de trains multivoitures (en particulier turbo-trains, Train à Grande Vitesse) ou dans tout autre domaine pour le conditionnement de locaux particuliers (groupe de "shelters", groupe d'habitations dans la recherche minière ou pétrolière...).

D'autres caractéristiques, buts et avantages de l'invention ressortiront de la description qui suit en référence aux dessins annexés qui en présentent, à titre d'exemple non limitatif, des modes de réalisation ; sur ces dessins :

- la figure 1, déjà commentée, illustre une installation classique de conditionnement et pressurisation,
- la figure 2 est un schéma d'ensemble d'une installation conforme à l'invention,
- la figure 3 représente un mode de réalisation préférentiel de l'ensemble amont de compression et de refroidissement,
- la figure 4 représente un mode de réalisation préférentiel de turbomachines situées à l'entrée de chaque zone de l'espace semi-clos.

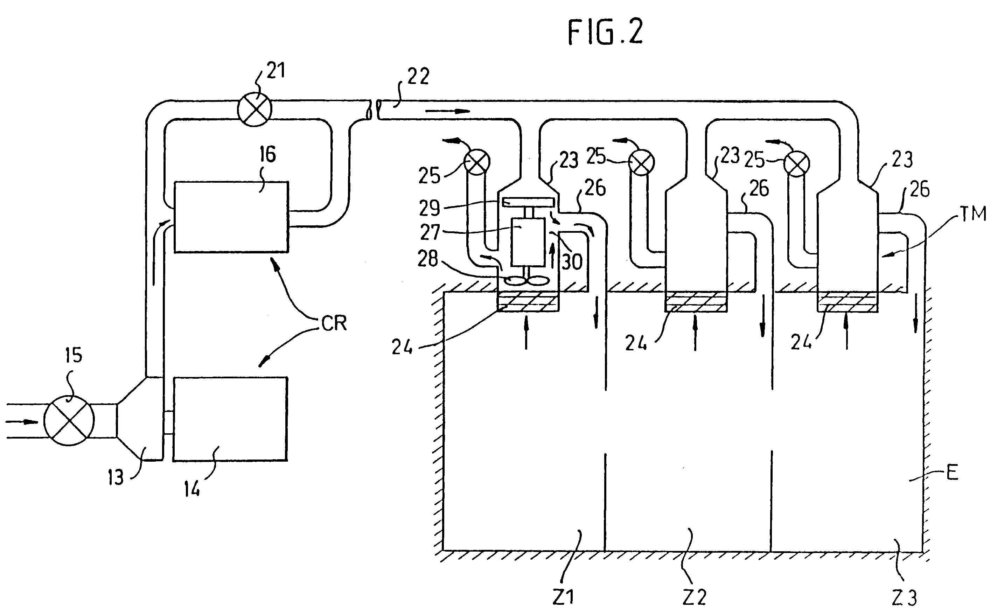

L'installation représentée à la figure 2 est destinée à conditionner et pressuriser l'air d'un espace semi-clos E constitué par plusieurs zones telles que $Z_1$, $Z_2$ et $Z_3$. Cette installation comprend un ensemble amont de compression et de refroidissement CR qui délivre vers un circuit aval de distribution 22 un flux d'air à température positive sous pression modérée ; ce flux d'air est divisé en plusieurs flux à proximité de l'espace semi-clos en vue d'alimenter en parallèle des turbomachines TM, chaque turbomachine TM étant disposée à une extrémité de distribution du circuit, à l'entrée de chaque zone $Z_1$, $Z_2$, $Z_3$ de l'espace semi-clos. (L'expression "à l'entrée de chaque zone" doit être interprété de façon large, elle signifie que la turbomachine est située à proximité immédiate de la zone ; elle peut être à l'intérieur de celle-ci, à l'extérieur ou pénétrer partiellement dans ladite zone).

L'ensemble amont CR comporte un compresseur 13 entraîné mécaniquement par un arbre relié à un moteur 14. Le compresseur est muni d'un moyen 15 de réglage de son débit d'entrée. Le compresseur 13 est relié à un refroidisseur 16 qui est lui-même relié au circuit aval de distribution 22. Une dérivation comportant une vanne 21 est montée en parallèle par rapport au refroidisseur 16 afin de permettre un réglage de la température de l'air délivré vers le circuit aval 22 ; ce réglage s'effectue en ajustant les débits mélangés issus de la dérivation et du refroidisseur.

Le circuit aval de distribution est relié à l'entrée 23 de chacune des turbomachines TM située à l'entrée de chaque zone $Z_1$, $Z_2$ et $Z_3$. Chaque turbomachine comporte un étage de turbine, en l'exemple une roue de turbine 29 montée sur le même arbre qu'un ventilateur ou compresseur 28. Un moteur/générateur électrique auxiliaire 27 est couplé sur cet arbre. Chaque turbomachine TM comporte en outre un filtre 24, à travers lequel s'effectue l'extraction de l'air de la zone considérée, une chambre 30 où s'effectue le mélange entre la fraction recyclée et l'air issu de l'étage de turbine, un conduit 26 pour délivrer le mélange dans la zone considérée, et une vanne d'évacuation vers l'extérieur 25.

Le compresseur 13 aspire de l'air (air neuf, air recyclé ou mélange des deux) et envoie l'air comprimé dans le refroidisseur 16 dans lequel l'air est refroidi jusqu'à une température positive qui peut être de l'ordre de 3° C ; la pression à la sortie du refroidisseur est modérée et supérieure à celle de l'espace semi-clos (par exemple surpression de 200 mb ($2.10^4$ Pa) par rapport à cet espace). Cet air circule dans le circuit de distribution 22 vers chacune des turbomachines TM, dans laquelle il subit une détente locale au niveau de l'étage de turbine, puis est mélangé à de l'air extrait de la zone correspondante avant d'être délivre vers celle-ci. Le travail fourni par la roue de turbine 29 est absorbé par le compresseur 28 qui assure l'extraction de l'air hors de la zone à travers le filtre 24, puis la circulation de cet air extrait, soit vers la chambre de mélange 30, soit vers la vanne d'évacuation 25. Le débit vers l'extérieur emporte une partie importante de la puissance de compression, de sorte que le bilan global à la sortie de chaque turbomachine TM est un refroidissement.

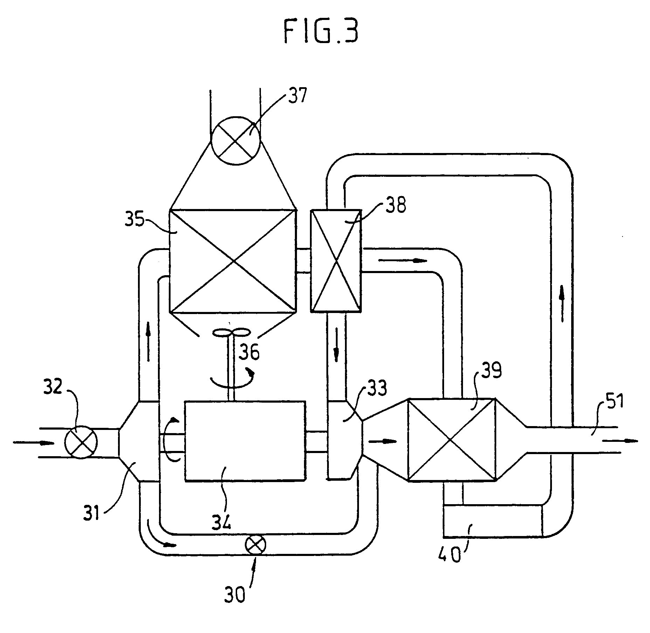

La figure 3 représente un mode de réalisation préférentiel de l'ensemble amont de compression et de refroidissement. Dans ce mode de réalisation, cet ensemble comporte un compresseur 31 entraîné mécaniquement par un arbre relié à un moteur thermique ou électrique 34 et à une turbine de détente 33. Le compresseur 31 est muni d'un moyen de réglage de débit 32. L'ensemble comporte également un refroidisseur qui est constitué par un échangeur 35 dont le flux primaire à refroidir est l'air comprimé issu du compresseur 31 et dont le flux secondaire refroidisseur est de l'air extérieur soufflé grâce à un ventilateur 36 entraîné par le moteur 34 ; une vanne 37 permet de réguler le flux d'air extérieur et, donc, le refroidissement de l'air primaire. Le primaire d'un réchauffeur 38 est relié à la sortie de l'échangeur 35 et délivre l'air vers un condenseur 39. Le circuit secondaire du réchauffeur 38 est relié, d'une part, à la turbine 33, d'autre part, à la sortie du condenseur 39 à travers un extracteur 40 de l'eau condensée. En sortie de la turbine 33, l'air refroidit le condenseur 39 et est dirigé vers le circuit aval de distribution référencé en 51 à la figure 3. Une dérivation comportant une vanne 30 relie le compresseur 31 au nez de la turbine 33 en vue de délivrer vers celle-ci un faible débit de dégivrage.

Le compresseur 31 aspire de l'air (généralement un mélange d'air neuf et d'air recyclé) et envoie l'air comprimé dans l'échangeur-refroidisseur 35 dans lequel ledit air est refroidi par l'air extérieur aspiré par le ventilateur 36 ; l'air subit un refroidissement. Le flux d'air sortant de l'échangeur passe dans le réchauffeur 38, puis dans le condenseur 39 où il est débarrassé d'une partie de son eau. Le réchauffeur permet d'élever le niveau de température à l'entrée de la turbine 33 pour éviter le givrage dans certains cas d'utilisation. Après passage à nouveau dans le réchauffeur, l'air est envoyé à travers la turbine 33 où il subit une détente avec travail, ainsi qu'un nouveau refroidissement. L'air détendu et refroidi traverse le condenseur 39 qu'il refroidit ; à la sortie de celui-ci, l'air qui est à une température positive et sous une pression modérée est envoyé par le circuit de distribution 51 vers les turbomachines situées à l'entrée de chaque zone de l'espace semi-clos.

Il est à noter que, par un effet secondaire, comme la détente n'est pas complète, le condenseur est plus chaud que dans les procédés classiques et ses températures de paroi sont plus élevées, ce qui diminue les risques de givrage interne.

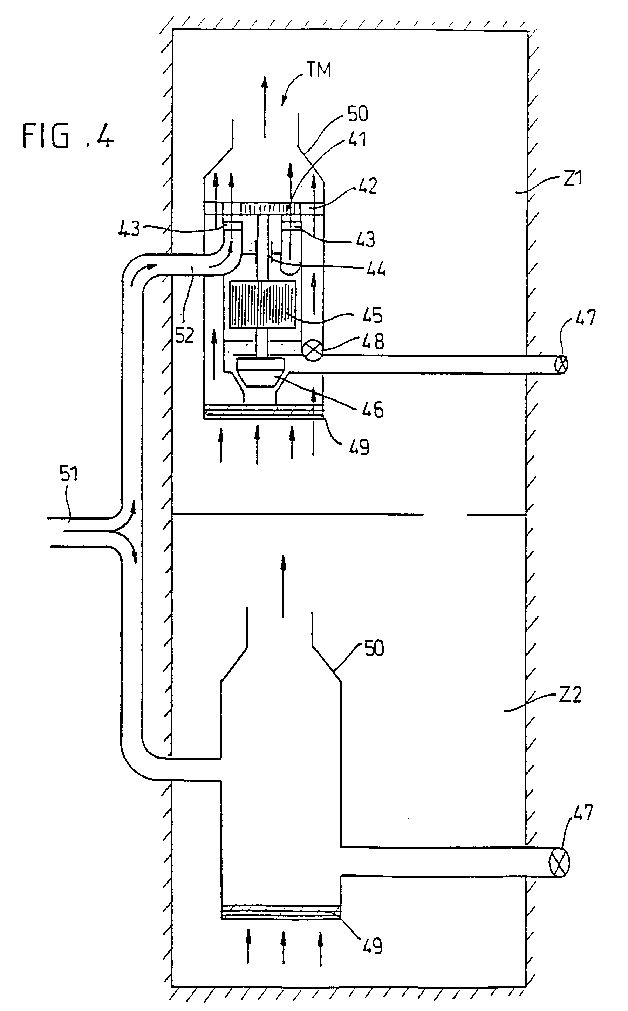

La figure 4 représente un mode de réalisation préférentiel d'une des turbomachines ; un espace comportant deux zones $Z_1$ et $Z_2$ est représenté à cette figure. Une branche du circuit de distribution 51 est reliée à chacune des turbomachines TM pour les alimenter en air. Chaque turbomachine TM comporte une entrée d'air 52 relié au circuit 51 et un étage de turbine qui reçoit l'air issu de cette entrée ; cet étage est constitué par un injecteur 43 relié à l'entrée d'air et une turbine sous forme de disque aileté 41 monté sur un arbre 44. Un compresseur 46 et un ventilateur 42 sont entraînés par le même arbre, le ventilateur faisant corps avec le disque de la turbine dans un mode de réalisation particulier. Un moteur/générateur électrique 45 est couplé sur l'arbre 44 en vue de permettre un freinage du disque aileté 41 et un entraînement du ventilateur 42 et du compresseur 46. Chaque turbomachine TM comporte également un filtre 49, une vanne 48 en aval du compresseur pour le prélèvement d'une fraction du flux comprimé, une vanne d'évacuation vers l'extérieur 47, et une chambre de mélange 50 débouchant dans la zone considérée.

L'air partiellement détendu, qui est amené par le circuit 51, entre dans la turbomachine par l'injecteur 43 et subit une deuxième détente dans l'étage de turbine 41. Le ventilateur 42 aspire de l'air qui est extrait de la zone considérée à travers le filtre 49. Cet air se mélange dans la chambre 50 à l'air qui sort de l'injecteur 43 après détente et refroidissement dans la turbine 41. Le mélange résultant, qui est soufflé dans la zone correspondante de l'espace semi-clos, se trouve en particulier à +3° C. La roue de compresseur 46 comprime une fraction de l'air extrait à travers le filtre 49, en vue de l'évacuer vers l'extérieur par la vanne 47. Ce compresseur 46 sert à assurer un complément de freinage et à évacuer à l'extérieur une partie de la puissance fournie par la turbine 41 au cours de la détente. Il est à noter qu'en évacuant l'air après passage dans le compresseur 46, on supprime les défauts des installations classiques concernant l'impossibilité d'optimiser les vannes d'évacuation. La vanne 48 permet de mélanger une partie de l'air chaud sortant du compresseur 46 avec la fraction recyclée extraite de la zone, de manière à ajuster localement, d une manière fine, la température de l'air sortant de la turbomachine.

Les exemples de réalisation décrit ci-dessus concerne des espaces semi-clos à deux ou trois zones. L'installation de l'invention peut bien entendu être utilisée quel que soit le nombre de zones, chaque zone étant équipée de manière similaire d'une turbomachine.

Dans l'installation conforme à l'invention, l'air peut circuler dans le circuit de distribution à une température positive, sans aucun inconvénient puisque les pertes par échauffement sont ensuite compensées au niveau local ; la formation et les dépôts de glace dans ce circuit, dont les tuyauteries sont en général longues et accidentées, sont ainsi totalement éliminés. Il est à noter que les turbomachines de détente locale sont soumises à des températures très modérées, et peuvent donc être réalisées à bas prix et faible masse en utilisant des matériaux thermoplastiques conventionnels et des roulements prégraissés du commerce.

**Revendications**

1. Procédé de conditionnement et de pressurisation, par circulation d'air, d'un espace semi-clos comportant plusieurs zones, dans lequel on comprime de l'air et on le soumet à un refroidissement, dit refroidissement amont, avant de le diviser en plusieurs flux et de le distribuer vers chaque zone de l'espace semi-clos, ledit procédé étant caractérisé en ce que :

   - l'air comprimé est soumis globalement après compression au refroidissement amont dans des conditions propres à garder sa pression supérieure à celle de l'espace semi-clos,
   - après division en plusieurs flux, l'air distribué vers chaque zone de l'espace semi-clos est soumis localement à une détente à l'entrée de la zone considérée.

2. Procédé selon la revendication 1, dans lequel on recycle une partie de l'air balayant les zones en le mélangeant avec de l'air neuf, le mélange recyclé étant comprimé, puis soumis au refroidissement amont avant d'être distribué vers chaque zone de l espace semi-clos et soumis à la détente locale avec production de travail à l'entrée de chacune desdites zones.

3. Procédé selon la revendication 2, dans lequel on évacue vers l'extérieur une partie de l'air balayant chaque zone de l'espace semi-clos.

4. Procédé selon l'une des revendications 1, 2 ou 3, dans lequel on effectue un séchage partiel de l'air comprimé après le refroidissement amont.

5. Installation pour le conditionnement et la pressurisation d'un espace semi-clos à plusieurs zones, comprenant un ensemble amont de compression et de refroidissement d'air (CR) et un circuit (22) de distribution aval de l'air doté d'extrémités de distribution vers chaque zone de l'espace semi-clos, caractérisée en ce qu'elle comprend une pluralité de turbomachines (TM) reliées au circuit de distribution, chaque turbomachine (TM) étant disposée sur une extrémité de distribution à l'entrée de chaque zone pour faire subir une detente locale avec production de travail au débit d'air distribué vers la zone considérée.

6. Installation selon la revendication 5, caractérisée en ce que chaque turbomachine (TM) agencée à l'entrée d'une zone de l'espace semi-clos comprend des moyens d'entrée d'air (23) reliés au circuit de distribution (22), un étage de turbine (29) agencée pour détendre et refroidir l'air issu des moyens d'entrée, des moyens (24, 28) d'extraction de l'air de la zone considérée de l'espace semi-clos, des moyens (25) d'évacuation vers l'extérieur d'une fraction de l'air extrait, des moyens (30) de mélange de l'autre fraction de l'air extrait, dite fraction recyclée, avec l'air issu de l'étage de turbine, et des moyens (26) pour délivrer le mélange dans la zone considérée.

7. Installation selon la revendication 6, caractérisée en ce que l'étage de turbine comprend un injecteur (43) relié aux moyens d'entrée d'air (52), un disque aileté (41) situé en regard dudit injecteur, et un moteur/générateur (45) permettant de freiner le disque aileté.

8. Installation selon la revendication 7, caractérisée en ce que les moyens d'extraction comprennent un ventilateur (42) agencé pour être entraîné par le moteur/générateur (45), les moyens d'évacuation vers l'extérieur comprenant une roue de compresseur (46) agencée pour être entraînée par ledit moteur/générateur (45).

9. Installation selon la revendication 8, caractérisée en ce qu'un moyen de prélèvement d'air (48) est agencé en sortie de la roue de compresseur (46) de façon à déboucher dans la fraction d'air recyclée en vue de permettre le mélange d'une partie de l'air comprimé avec ladite fraction recyclée.

10. Installation selon l'une des revendications 5 à 9, dans laquelle l'ensemble amont de compression et de refroidissement (CR) comprend un compresseur (31) agencé pour comprimer de l'air neuf éventuellement en mélange avec de l'air recyclé, et des moyens (33, 35) pour refroidir et détendre partiellement l'air comprimé issu dudit compresseur.

11. Installation selon l'une des revendications 5 à 10, dans laquelle l'ensemble amont de compression et de refroidissement (CR) est doté de moyens (39, 40) d'extraction d'eau de l'air comprimé.

12. Installation selon l'une des revendications 5 à 9, caractérisée en ce que l'ensemble amont de compression et de refroidissement (CR) comporte un compresseur (13) entraîné par un moteur (14), un moyen (15) de réglage du débit d'entrée d'air dans ledit compresseur, des moyens de refroidissement (16) agencés pour recevoir l'air issu du compresseur et délivrer l'air refroidi vers le circuit aval de distribution, et des moyens (21) de réglage de la température et de la pression de l'air délivré vers ledit circuit de distribution, ce circuit étant agencé pour alimenter en parallèle les turbomachines (TM) situées à l'entrée des zones de l'espace semi-clos.

13. Installation selon l'une des revendications 5 à 12, caractérisée en ce que l'ensemble amont de compression et de refroidissement (CR) comprend, en sortie du compresseur (31), une boucle de refroidissement et de détente comportant un échangeur (35) agencé pour refroidir l'air comprimé par circulation d'air extérieur dans son secondaire, un réchauffeur (38), un condenseur (39) associé à un extracteur d'eau (40), et une turbine de détente (33), montée sur l'axe du compresseur (31) et agencée pour refroidir le condenseur et envoyer l'air vers le circuit aval de distribution, le primaire du réchauffeur (38) étant relié à la sortie de l'échangeur (35) et à l'entrée du condenseur, cependant que le secondaire dudit réchauffeur (38) est relié à la sortie du condenseur (39) et à l'entrée de la turbine de détente (33).

## Claims

1. A method for conditioning and pressurizing, by circulation of air, a partly enclosed space comprising several areas, wherein one compresses air and subjects it to cooling, referred to as upstream cooling, before dividing it into several streams and distributing it toward each area of the partly enclosed space, said method being characterized in that:

the compressed air is subjected globally after compression to upstream cooling in conditions suitable for maintaining its upper pressure at that of the partly enclosed space,
after being divided into several streams the air distributed toward each area of the partly enclosed space is subjected locally to decompression at the entrance of the area in question.

2. The method of claim 1, wherein one recycles a portion of the air sweeping the areas while mixing it with new air, the recycled mixture being compressed, then subjected to up-stream cooling before being distributed toward each area of the partly enclosed space and subjected to local decompression with production of work at the entrance of each of said areas.

3. The method of claim 2, wherein one evacuates to the outside a portion of the air sweeping each area of the partly enclosed space.

4. The method of any of claims 1, 2 or 3, wherein one effects a partial drying of the compressed air after upstream cooling.

5. An installation for conditioning and pressurizing a partly enclosed space having several areas, comprising an upstream air compression and cooling unit (CR) and a downstream air distribution circuit (22) provided with distribution ends toward each area of the partly enclosed space, characterized in that it comprises a plurality of turbo-machines (TM) connected to the distribution circuit, each turbo-machine (TM) being disposed on a distribution end at the entrance or each area for effecting local decompression with production of work on the air supply distributed toward the area in question.

6. The installation of claim 5, characterized in that each turbo-machine (TM) disposed at the entrance of an area of the partly enclosed space comprises air inlet means (23) connected to the distribution circuit (22), a turbine stage (29) adapted to decompress and cool the air derived from the inlet means, means (24, 28) for extracting air from the area in question of the partly enclosed space, means (25) for evacuating a fraction of the extracted air to the outside, means (30) for mixing the other fraction of extracted air, referred to as the recycled fraction, with air derived from the turbine stage, and means (26) for delivering the mixture to the area in question.

7. The installation of claim 6, characterized in that the turbine stage comprises an injector (43) connected to the air inlet means (52), a winged disk (41) located opposite said injector, and a motor/generator (45) permitting braking of the winged disk.

8. The installation of claim 7, characterized in that the extracting means comprise a ventilator (42) adapted to be driven by the motor/generator (45), the evacuating means to the outside comprising a compressor wheel (46) adapted to be driven by said motor/generator (45).

9. The installation of claim 8, characterized in that an air drawing means (48) is disposed at the exit of the compressor wheel (46) so as to open into the fraction of recycled air in order to permit mixture of a portion of compressed air with said recycled fraction.

10. The installation of any of claims 5 to 9, wherein the upstream compression and cooling unit (CR) comprises a compressor (31) adapted to compress new air possibly in mixture with recycled air, and means (33, 35) for cooling and partly decompressing the compressed air derived from said compressor. .

11. The installation of any of claims 5 to 10, wherein the upstream compression and cooling unit (CR) is provided with means (39, 40) for extracting water from the compressed air.

12. The installation of any of claims 5 to 11, characterized in that the upstream compression and cooling unit (CR) comprises a compressor (13) driven by a motor (14), a means (13) for regulating the air input rate in said compressor, cooling means (16) adapted to receive the air derived from the compressor and deliver cooled air toward the downstream distribution circuit, and means (21) for regulating the temperature and pressure of the air delivered toward said distribution circuit, said circuit being adapted to supply in parallel the turbomachines (TM) located at the entrance of the areas of the partly enclosed space.

13. The installation of any of claims 5 to 12, characterized in that the upstream compression and cooling unit (CR) comprises, at the exit of a compressor (32), a cooling and decompression loop comprising an exchanger (35) adapted to cool the compressed air by circulation of outside air in its secondary, a heater (38), a condenser (39) associated with a water extractor (40), and a decompression turbine (33), mounted on the axle of the compressor (32) and adapted to cool the condenser and send air toward the downstream distribution circuit, the primary of the heater (38) being connected to the outlet of the exchanger (35) and to the inlet of the condenser, while the secondary of said heater (38) is connected to the outlet of the condenser (39) and to the inlet of the decompression turbine (33).

**Patentansprüche**

1. Verfahren zum Klimatisieren und Unter-Druck-Setzen eines mehrere Zonen aufweisenden halbgeschlossenen Raums durch Luftzirkulation, wobei Luft komprimiert und einer als stromaufwärtige Kühlung bezeichneten Kühlung unterzogen wird, bevor sie in mehrere Ströme unterteilt und zu jeder Zone des halbgeschlossenen Raums geleitet wird, **dadurch gekennzeichnet**, daß

- die komprimierte Luft nach der Kompression einer allgemeinen stromaufwärtigen Abkühlung unter solchen Bedingungen unterzogen wird, die dazu geeignet sind, ihren Druck über dem Druck des halbgeschlossenen Raums zu halten,

- nach dem Aufteilen in mehrere Ströme die zu jeder Zone des halbgeschlossenen Raums geleitete Luft lokal einer Entspannung am Eingang der betreffenden Zone unterzogen wird.

2. Verfahren nach Anspruch 1, bei dem man einen Teil der die Zonen durchstreichenden Luft erneut verwendet, indem man sie mit Frischluft mischt, wobei das wiederverwendete Gemisch komprimiert, anschließend einer stromaufwärtigen Abkühlung unterzogen wird, bevor es der jeweiligen Zone des halbgeschlossenen Raums zugeleitet, und einer lokalen Entspannung mit Leistung von Arbeit am Eingang jeder dieser Zonen unterzogen wird.

3. Verfahren nach Anspruch 2, bei dem man einen Teil der jede Zone des halbgeschlossenen Raums durchstreichenden Luft nach außen abläßt.

4. Verfahren nach einem der Ansprüche 1, 2 und 3, bei dem man eine teilweise Trocknung der komprimierten Luft nach der stromaufwärtigen Abkühlung vornimmt.

5. Anlage zum Klimatisieren und zum Unter-Druck-Setzen eines mehrere Zonen aufweisende halbgeschlossenen Raums, umfassend eine stromaufwärtige Luftkompressions- und Kühleinrichtung (CR) und einen stromabwärtigen Luftverteilerkreis (22), der mit Verteilerenden ausgestattet ist, die zu jeder Zone des halbgeschlossenen Raums führen, **dadurch gekennzeichnet**, daß sie mehrere Turbomaschinen (TM) aufweist, die mit dem Verteilerkreis verbunden sind, und von denen jede Turbomaschine (TM) an einem Verteilerende am Eingang jeder Zone angeordnet ist, um die zu der betreffenden Zone geleitete Zuluft einer lokalen Entspannung mit Leistung von Arbeit zu unterziehen.

6. Anlage nach Anspruch 5, **dadurch gekennzeichnet**, daß jede Turbomaschine (TM) am Eingang einer Zone des halbgeschlossenen Raums eine Lufteinlaßeinrichtung (23) aufweist, die mit dem Verteilerkreis (22) verbunden ist, ferner eine Turbinenstufe (29) zum Entspannen und zum Kühlen der von der Einlaßeinrichtung gelieferten Luft, eine Einrichtung (24, 28) zum Abziehen von Luft aus der betreffenden Zone des halbgeschlossenen Raums, eine Einrichtung (25) zum Ausleiten eines Teils der abgezogenen Luft nach außen, eine Einrichtung (30) zum Mischen des verbliebenen Teils der abgezogenen Luft, das heißt des wiederverwendeten Anteils, mit der von der Turbinenstufe ausgegebenen Luft, und eine Einrichtung (26) zum Leiten des Gemisches in die betreffende Zone.

7. Anlage nach Anspruch 6, **dadurch gekennzeichnet**, daß die Turbinenstufe einen mit einer Lufteintrittseinrichtung (52) gekoppelten Einblaser (43), eine dem Einblaser gegenüberliegend angeordnete Flügelscheibe (41) und einen Motor-Generator (45) aufweist, der die Flügelscheibe abzubremsen vermag.

8. Anlage nach Anspruch 7, **dadurch gekennzeichnet**, daß die Abzieheinrichtung ein Gebläse (42), das von dem Motor-Generator (45) antreibbar ist, die Einrichtung zum Ausleiten ein Verdichterrad (46) aufweist, welches von dem Motor-Generator (45) antreibbar ist.

9. Anlage nach Anspruch 8, **dadurch gekennzeichnet**, daß an dem Ausgang des Verdichterrads (46) eine Luftanzapfeinrichtung (48) angeordnet ist, derart, daß sie in den Teil der wiederverwendeten Luft mündet, damit ein Teil der komprimierten Luft sich mit dem wiederverwendeten Anteil vermischen kann.

10. Anlage nach einem der Ansprüche 5 bis 9, bei der die stromaufwärtige Kompressions- und Abkühleinheit einen Kompressor (41) zum Komprimieren der Frischluft gegebenenfalls gemischt mit der wiederverwendeten Luft und eine Einrichtung (33, 35) zum Kühlen und teilweisen Entspannen der von dem Kompressor gelieferten komprimierten Luft aufweist.

11. Anlage nach einem der Ansprüche 5 bis 10, bei der die stromaufwärtige Kompressions- und Kühleinheit (CR) mit einer Einrichtung (39, 40) ausgestattet ist, die der komprimierten Luft Wasser entzieht.

12. Anlage nach einem der Ansprüche 5 bis 9, **dadurch gekennzeichnet**, daß die stromaufwärtige Kompressions- und Kühleinrichtung (CR) einen Kompressor (13) aufweist, der von einem Motor (14) angetrieben wird, ferner eine Einrichtung (15) zum Regulieren der Eintrittsluftmenge in den Kompressor, eine Kühleinrichtung (16) zum Empfangen der von dem Kompressor abgegebenen Luft und zum Ausgeben von gekühlter Luft in den stromabwärtigen Verteilerkreis, und eine Einrichtung (21) zum Regulieren der Temperatur und des Drucks der in den Verteilerkreis gelieferten Luft, wobei dieser Kreis derart ausgebildet ist, daß er die am Eingang der Zonen des halbgeschlossenen Raums befindlichen Turbomaschinen (TM) parallel speist.

13. Anlage nach einem der Ansprüche 5 bis 12, **dadurch gekennzeichnet**, daß die stromaufwärtige Kompressions- und Kühleinheit (CR) am Ausgang des Kompressors (31) eine Kühl- und Entspannungsschleife mit einem Tauscher (35) aufweist, mit dessen Hilfe die komprimierte Luft durch Zirkulation von Außenluft in seinem Sekundärkreis gekühlt wird, einen Lufterhitzer (38), einen Kondensator (39) in Verbindung mit einem Wasserentzieher (40), und eine Entspannungsturbine (33), die auf der Achse des Kompressors (31) gelagert ist und dazu dient, den Kondensator zu kühlen und Luft in den stromabwärtigen Verteilerkreis einzuspeisen, wobei der Primärkreis des Lufterhitzers (38) mit dem Ausgang des Tauschers (35) und dem Eingang des Kondensators gekoppelt ist, während der Sekundärkreis des Lufterhitzers (38) mit dem Ausgang des Kondensators (39) und dem Eingang der Entspannungsturbine (33) verbunden ist.

FIG.1

# FIG.2

# FIG.3

FIG .4